# EUROPEAN PATENT APPLICATION

(11) **EP 4 717 342 A1**
(43) Date of publication of application: **01.04.2026**
(21) Application number: 24831308.2
(22) Date of filing: 02.02.2024
(51) Int. Cl.: B01D 53/04

(54) **FLOW PASSAGE FORMATION PLATE, GAS ADSORPTION UNIT, AND GAS ADSORPTION DEVICE**

(30) Priority: 30.06.2023 JP 2023108882
(71) Applicant: Mitsubishi Heavy Industries, Ltd., Tokyo 100-8332 (JP)
(72) Inventor: KATSUKI Masatoshi, Tokyo 100-8332 (JP); KAWAMIZU Tsutomu, Tokyo 100-8332 (JP); SUZUKI Takumi, Tokyo 100-8332 (JP)
(74) Representative: Studio Torta S.p.A.
(86) International application number: PCT/JP2024/003506
(87) International publication number: WO 2025/004427

(57) **Abstract**

This flow path formation plate is used for forming a flow path of a gas adsorption unit, and comprises: a porous plate having a plurality of hole parts extending in the plate thickness direction; and a gas adsorbent disposed so as to fill the inside of each hole part. The porous plate is formed of a material having a thermal conductivity higher than the thermal conductivity of the gas adsorbent.

## Description

### Technical Field

The present disclosure relates to a flow channel forming plate, a gas adsorption unit, and a gas adsorption device. Priority is claimed to Japanese Patent Application No. 2023-108882, filed June 30, 2023, the contents of which are incorporated herein by reference.

### Background Art

For example, various gas adsorption devices have been proposed to selectively recover carbon dioxide and the like from a gas. PTL 1 discloses a gas adsorption device including a heat transfer pipe through which a heat medium flows and a granular adsorbent packed around the heat transfer pipe. For example, in a case of adsorbing carbon dioxide from a gas, an adsorbent in which an amine is impregnated into a porous material or resin is suitably used. It is known that by circulating the gas through the gas adsorption device while controlling a temperature of the adsorbent with the heat of the heat medium, carbon dioxide in the gas can be adsorbed and desorbed by the adsorbent.

### Citation List

### Patent Literature

[PTL 1] U.S. Patent No. 9751039

### Summary of Invention

### Technical Problem

However, in the technique according to PTL 1, heat is not efficiently transferred to the adsorbent in a region away from the heat transfer pipe, and there is a problem that temperature control is difficult. As a result, the adsorption performance of the adsorbent cannot be fully used, and the efficiency of the gas adsorption device is decreased.

The present disclosure has been made to solve the above-described problem, and an object of the present disclosure is to provide a flow channel forming plate, a gas adsorption unit, and a gas adsorption device, which can adsorb and desorb a target component with higher efficiency.

### Solution to Problem

In order to solve the above-described problem, a flow channel forming plate according to the present disclosure is a flow channel forming plate that is used to form a flow channel of a gas adsorption unit, the flow channel forming plate including a porous plate having a plurality of hole portions extending in a plate thickness direction, and a gas adsorbent disposed to fill an inside of each of the hole portions, in which the porous plate is formed of a material having a thermal conductivity higher than a thermal conductivity of the gas adsorbent.

A gas adsorption unit according to the present disclosure includes a plurality of the flow channel forming plates disposed at intervals in the plate thickness direction to form the flow channel therebetween, and a casing that holds the plurality of flow channel forming plates from an outer side.

A gas adsorption device according to the present disclosure includes a gas supply flow channel through which a gas containing a component to be adsorbed flows, the gas adsorption unit provided on the gas supply flow channel, and a temperature control unit provided adjacent to the gas adsorption unit to control a temperature of the gas adsorbent.

### Advantageous Effects of Invention

According to the present disclosure, it is possible to provide a flow channel forming plate, a gas adsorption unit, and a gas adsorption device, which can adsorb and desorb a target component with higher efficiency.

### Brief Description of Drawings

FIG. 1 is a cross-sectional view showing a configuration of a gas adsorption device according to an embodiment of the present disclosure.
FIG. 2 is a front view showing a configuration of a gas adsorption unit according to the embodiment of the present disclosure.
FIG. 3 is a plan view showing a configuration of a flow channel forming plate according to the embodiment of the present disclosure.
FIG. 4 is a cross-sectional view showing a configuration of the flow channel forming plate according to the embodiment of the present disclosure.
FIG. 5 is a cross-sectional view showing a modification example of the flow channel forming plate according to the embodiment of the present disclosure. Description of Embodiments

### (Configuration of Gas Adsorption Device 1)

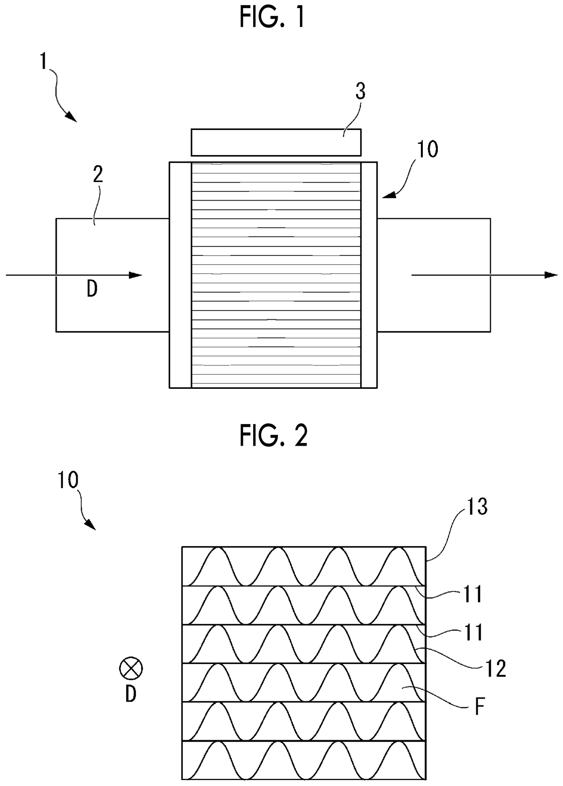

Hereinafter, a gas adsorption device 1, a gas adsorption unit 10, and a flow channel forming plate 11 according to a first embodiment of the present disclosure will be described with reference to FIGS. 1 to 4.

The gas adsorption device 1 is, for example, provided on an exhaust line of a gas turbine combined cycle plant (GTCC) and is used to adsorb and remove carbon dioxide contained in exhaust gas. As shown in FIG. 1, the gas adsorption device 1 includes a gas supply flow channel 2, a gas adsorption unit 10, and a temperature control unit 3.

The gas supply flow channel 2 is a pipe through which a gas containing a component to be adsorbed, such as the above-described exhaust gas, flows. The gas adsorption unit 10 is provided on the gas supply flow channel 2. A detailed configuration of the gas adsorption unit 10 will be described later. The gas adsorption unit 10 adsorbs and removes a gas component to be adsorbed, such as carbon dioxide, from the exhaust gas. Therefore, in the downstream side of the gas adsorption unit 10 in the gas supply flow channel 2, a gas having a lower carbon dioxide concentration than a carbon dioxide concentration on the upstream side flows. The temperature control unit 3 is disposed so as to be provided adjacent to the gas adsorption unit 10. The temperature control unit 3 is, for example, an electric heater or a ceramic heater. The temperature control unit 3 controls a temperature of a gas adsorbent 42 in the gas adsorption unit 10 to advance each process of adsorption and desorption of the gas by the gas adsorbent 42. In a case where the gas flowing through the gas supply flow channel 2 is at a high temperature, the temperature of the gas adsorbent 42 can be controlled by the heat of the gas itself without relying on the temperature control unit 3.

### (Configuration of Gas Adsorption Unit 10)

As shown in FIG. 2, the gas adsorption unit 10 includes a plurality of flow channel forming plates 11 and a casing 13 that holds the flow channel forming plates 11 from the outer side. In addition, the gas adsorption unit 10 includes a plurality of flow channels F extending in a flow direction D of the gas. The flow channels F are defined by the plurality of flow channel forming plates 11. The flow channel forming plate 11 has a plate shape extending in the flow direction D of the gas. A plurality of the flow channel forming plates 11 are disposed at intervals in a plate thickness direction. In addition, another flow channel forming plate 11 (referred to as a curved plate 12) curved in a wave shape is disposed between a pair of the flow channel forming plates 11 adjacent to each other in the plate thickness direction. The curved plate 12 is curved to be corrugated on both sides in the plate thickness direction, and a top portion of a convex portion thereof is in contact with and fixed to any one of the adjacent flow channel forming plates 11. An angle formed by the curved plate 12 and the flow channel forming plate 11 when viewed in the flow direction D of the gas is, for example, less than 90°. That is, the flow channel F has a triangular cross-sectional shape when viewed in the flow direction D of the gas. The angle formed by the curved plate 12 and the flow channel forming plate 11 may be 90° or greater.

### (Configuration of Flow Channel Forming Plate 11)

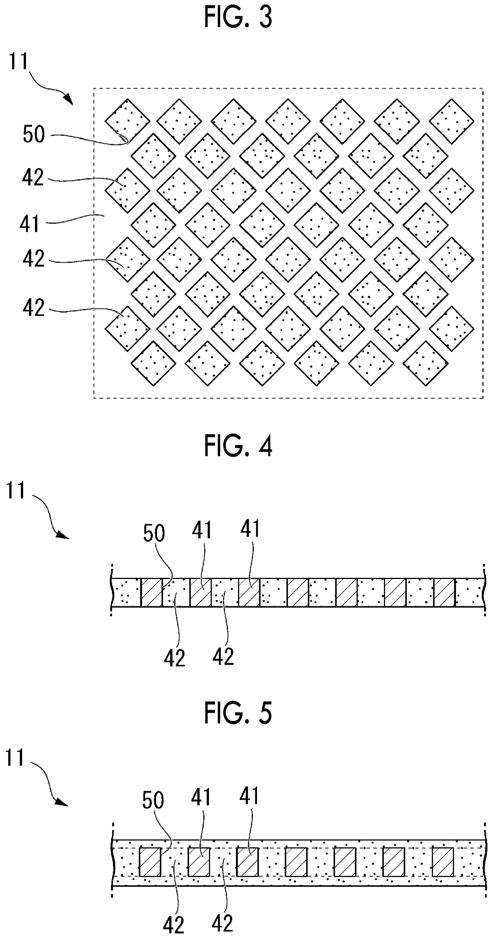

As shown in FIG. 3, the flow channel forming plate 11 has a porous plate 41 and a gas adsorbent 42. The porous plate 41 is formed of a material having a thermal conductivity higher than a thermal conductivity of the gas adsorbent 42. The porous plate 41 has greater rigidity than the gas adsorbent 42. The porous plate 41 is, for example, a metal lath, is integrally formed of a metal material to have a plate shape, and has a plurality of hole portions 50 extending in the plate thickness direction. The hole portions 50 have a rhombic shape in a plan view, and are regularly or irregularly arranged at intervals in an in-plane direction, for example. The planar shape of the hole portion 50 may be circular, rectangular, or other polygonal. The gas adsorbent 42 is filled inside each of the hole portions 50. In a case where carbon dioxide is the component to be adsorbed, for example, the gas adsorbent 42 is suitably a substance such as an amine-based substance supported on a porous material, zeolite, or a metal organic framework. As shown in FIG. 4, the gas adsorbent 42 is filled only inside the hole portion 50, and in a case of being viewed in a cross section, both sides of the porous plate 41 in the plate thickness direction are exposed to the outside (flow channel F).

### (Action and Effect)

In operation of the gas adsorption device 1, first, the gas is caused to flow through the gas supply flow channel 2. The temperature of the gas adsorbent 42 may be lowered as necessary. As a result, adsorption of a gas component to be adsorbed, such as carbon dioxide, by the gas adsorbent 42 is started. In a case where the adsorption capacity of the gas adsorbent 42 decreases, the temperature of the gas adsorbent 42 is raised by the temperature control unit 3 to desorb carbon dioxide from the gas adsorbent 42, and then the temperature of the gas adsorbent 42 is lowered. It is desirable that a flow channel of gas during desorption is configured to be switched by a damper or the like such that the flow channel of gas during desorption is different from the flow channel of gas during adsorption. By repeating this cycle, the gas is adsorbed and desorbed in the long term. A pressure in the device may be reduced in a case of desorbing carbon dioxide (adsorption component). Further, in a case of cooling during adsorption, a low-temperature gas may be caused to flow, or the low-temperature substance and the gas adsorbent 42 may be subjected to heat exchange by the temperature control unit 3. In addition, the adsorption and desorption processes may be switched by rotating or moving the gas adsorbent 42 itself. In addition, a cooling mechanism or the like may be provided on the upstream side of the device to make the gas temperature during adsorption lower.

Here, in the related art, various gas adsorption devices 1 have been proposed to selectively recover carbon dioxide or the like from a gas. As an example, a device including a heat transfer pipe through which a heat medium flows and a granular adsorbent packed around the heat transfer pipe is disclosed. It has been considered that carbon dioxide in the gas can be adsorbed to the adsorbent by circulating the gas in the device while controlling the temperature of the adsorbent by heat of a heat medium.

However, in the related art, heat is not efficiently transferred to the adsorbent in a region away from the heat transfer pipe, and there is a problem that temperature control is difficult. As a result, the adsorption performance of the adsorbent cannot be fully used, and the efficiency of the gas adsorption device 1 is decreased. Therefore, in the present embodiment, each of the above-described configurations is adopted.

According to the above-described configuration, the gas adsorbent 42 is provided to fill the hole portion 50 of the porous plate 41. Specifically, the gas adsorbent 42 in the hole portion 50 and the porous plate 41 that is a heat conductive material are disposed in a state of being close to each other. Therefore, in a case where the gas adsorbent 42 is heated through the porous plate 41, heat can be efficiently transferred to the gas adsorbent 42. As a result, non-uniformity in temperature of the gas adsorbent 42 is reduced, and the gas adsorption and desorption can be more quickly and stably carried out. In addition, since the porous plate 41 formed of a metal material is used, the strength and the rigidity of the gas adsorbent 42 can be complemented by the porous plate 41. As a result, the strength of the flow channel forming plate 11 can be further increased.

In addition, according to the above-described configuration, since the metal lath, which is an easily available metal porous body, is used as the porous plate 41, the flow channel forming plate 11 can be more cheaply and easily produced. As a result, maintenance costs and manufacturing costs of the entire device can be reduced.

Further, according to the above-described configuration, since the porous plate 41 is exposed to the outside on both sides in the plate thickness direction, for example, in a case where the temperature of the gas adsorbent 42 is controlled by the heat of the gas flowing through the flow channel F or the temperature control unit 3, the heat is easily transferred to the porous plate 41 by the gas coming into contact with the porous plate 41. Alternatively, the heat of the temperature control unit 3 is easily transferred throughout the porous plate 41. Therefore, temperature control of gas adsorbent 42 can be carried out stably with higher responsiveness. In addition, by filling the hole portion 50 of the metal lath with the gas adsorbent 42, the gas adsorbent 42 can be more firmly and stably held in the hole portion 50. As a result, the flow channel forming plate 11 can be stably used for a long period of time.

In addition, according to the above-described configuration, the flow channel F can be formed by disposing a plurality of the flow channel forming plates 11 at intervals, and the flow channel forming plates 11 can be held by the casing 13. As a result, each of the gas adsorption units 10 can be easily transported and installed. In other words, by modularizing the gas adsorption unit 10, the gas adsorption unit 10 can be easily attached and detached or replaced when the gas adsorption unit 10 reaches the end of the life. Therefore, it is possible to efficiently perform maintenance work or construction work at the plant in a shorter period of time.

In addition, according to the above-described configuration, since the other flow channel forming plate 11 curved in a wave shape is interposed between the pair of flow channel forming plates 11, the strength between the plate-shaped flow channel forming plates 11 is secured, and the cross-sectional shape of the flow channel F can be further stably maintained. In addition, since the surface area of the gas adsorbent 42 in the flow channel F is also increased, the gas adsorption can be further performed more efficiently. Furthermore, by bringing the other flow channel forming plate 11 (curved plate 12) in a wave shape into contact with the flat plate-shaped flow channel forming plate 11, the heat is three-dimensionally transferred, and the heating efficiency can be improved.

Furthermore, according to the above-described configuration, since the flow channel F is configured such that the gas flows in a direction along a surface of the porous plate 41, for example, obstruction of the flow channel F due to foreign matter such as dust contained in the gas being captured by the gas adsorbent 42 is less likely to occur as compared to a case where the gas flows from a direction facing the porous plate 41. As a result, it is possible to stably use the gas adsorption unit 10 for a longer period of time.

Therefore, according to the above-described configuration, it is possible to provide a gas adsorption device 1 capable of stably performing gas adsorption for a longer period of time.

### (Other Embodiments)

The embodiments of the present disclosure have been described in detail with reference to the drawings hereinbefore. However, the specific configuration is not limited to the embodiments, and includes design changes and the like within a scope not departing from the gist of the present disclosure.

For example, in the above-described embodiment, an example in which both sides of the porous plate 41 of the flow channel forming plate 11 in the plate thickness direction are exposed to the outside has been described. However, as a modification example, as shown in FIG. 5, it is also possible to provide a plurality of layers of the gas adsorbent 42 to cover a part or the entire part of both sides in the plate thickness direction. According to the configuration, since the effective area of the gas adsorbent 42 is increased, it is possible to adsorb a larger amount of the target component by the gas adsorbent 42.

In addition, as the temperature control unit 3, in addition to the electric heater and the ceramic heater, a configuration in which the porous plate 41 is directly supplied with an electric current to generate Joule heat via its the internal resistance and heat the gas adsorbent 42 can also be adopted. Even in this case, the same actions and effects as those described above can be obtained.

In addition, the aspect of the porous plate 41 is not limited to the metal lath, and a thin plate-shaped metal porous body having a large number of hole portions 50 can also be suitably used, such as a mesh or a wire mesh. With this configuration as well, the same actions and effects as those described above can be obtained.

### <Supplementary Notes>

The flow channel forming plate 11, the gas adsorption unit 10, and the gas adsorption device 1 according to each embodiment are understood as follows, for example.
(1) A flow channel forming plate 11 according to a first aspect is a flow channel forming plate 11 that is used to form a flow channel F of a gas adsorption unit 10, the flow channel forming plate 11 including: a porous plate 41 having a plurality of hole portions 50 extending in a plate thickness direction, and a gas adsorbent 42 disposed to fill an inside of each of the hole portions 50, in which the porous plate 41 is formed of a material having a thermal conductivity higher than a thermal conductivity of the gas adsorbent 42.

According to the above-described configuration, since the gas adsorbent 42 is provided to fill the hole portions 50 of the porous plate 41, in a case where the gas adsorbent 42 is heated through the porous plate 41, heat can be efficiently transferred to the gas adsorbent 42. As a result, non-uniformity in temperature of the gas adsorbent 42 is reduced, and the gas adsorption and desorption can be more stably carried out.

(2) A flow channel forming plate 11 according to a second aspect is the flow channel forming plate 11 according to (1), in which the porous plate 41 has greater rigidity than the gas adsorbent 42.

According to the above-described configuration, the rigidity of the entire flow channel forming plate 11 can be increased by the porous plate 41.

(3) A flow channel forming plate 11 according to a third aspect is the flow channel forming plate 11 according to (1) or (2), in which the porous plate 41 is a metal lath.

According to the above-described configuration, since the metal lath that is easily available is used as the porous plate 41, the flow channel forming plate 11 can be more cheaply produced. As a result, maintenance costs and manufacturing costs of the entire device can be reduced.

(4) A flow channel forming plate 11 according to a fourth aspect is the flow channel forming plate 11 according to any one of (1) to (3), in which the porous plate 41 is exposed to an outside on both sides in the plate thickness direction.

According to the above-described configuration, since the porous plate 41 is exposed to the outside on both sides in the plate thickness direction, for example, in a case where the temperature of the gas adsorbent 42 is controlled by the heat of the gas flowing through the flow channel F, the heat is easily transferred to the porous plate 41 by the gas coming into contact with the porous plate 41. Therefore, temperature control of gas adsorbent 42 can be carried out stably with higher responsiveness. In addition, by filling the hole portion 50 of the metal lath with the gas adsorbent 42, the gas adsorbent 42 can be more firmly and stably held in the hole portion 50. As a result, the flow channel forming plate 11 can be stably used for a long period of time.

(5) A flow channel forming plate 11 according to a fifth aspect is the flow channel forming plate 11 according to any one of (1) to (3), in which, in a cross-sectional view along the plate thickness direction, the gas adsorbent 42 is further provided on both sides of the porous plate 41 in the plate thickness direction.

According to the above-described configuration, the gas adsorbent 42 is further provided on both sides of the porous plate 41 in the plate thickness direction to cover the porous plate 41. As a result, since the effective area of the gas adsorbent 42 is increased, it is possible to adsorb a larger amount of the target component by the gas adsorbent 42.

(6) A gas adsorption unit 10 according to a sixth aspect includes a plurality of the flow channel forming plates 11 according to any one of (1) to (5), which are disposed at intervals in the plate thickness direction to form the flow channel F therebetween, and a casing 13 that holds the plurality of flow channel forming plates 11 from an outer side.

According to the above-described configuration, the flow channel F can be formed by disposing a plurality of the flow channel forming plates 11 at intervals, and the flow channel forming plates 11 can be held by the casing 13. As a result, each of the gas adsorption units 10 can be easily transported and installed. Therefore, it is possible to efficiently perform maintenance work or construction work at the plant in a shorter period of time.

(7) A gas adsorption unit 10 according to a seventh aspect is the gas adsorption unit 10 according to (6), the gas adsorption unit 10 further including: another flow channel forming plate 11 provided between a pair of the flow channel forming plates 11 adjacent to each other in the plate thickness direction, curved to be corrugated in the plate thickness direction, and having a top portion of a convex portion in contact with any one of the pair of flow channel forming plates 11.

According to the above-described configuration, since the other flow channel forming plate 11 curved in a wave shape is interposed between the pair of flow channel forming plates 11, the cross-sectional shape of the flow channel F can be further stably maintained. In addition, since the surface area of the gas adsorbent 42 in the flow channel F is also increased, the gas adsorption can be performed more efficiently. Furthermore, by bringing the other flow channel forming plate 11 in a wave shape into contact with the flat plate-shaped flow channel forming plate 11, the heat is three-dimensionally transferred, and the heating efficiency can be improved.

(8) A gas adsorption unit 10 according to an eighth aspect is the gas adsorption unit 10 according to (6) or (7), in which the flow channel F is configured such that a gas flows in a direction along a surface of the porous plate 41.

According to the above-described configuration, since the flow channel F is configured such that the gas flows in a direction along a surface of the porous plate 41, for example, obstruction of the flow channel F due to foreign matter such as dust contained in the gas being captured by the gas adsorbent 42 is less likely to occur as compared to a case where the gas flows from a direction facing the porous plate 41. As a result, it is possible to stably use the gas adsorption unit 10 for a longer period of time.

(9) A gas adsorption device 1 according to a ninth aspect includes a gas supply flow channel 2 through which a gas containing a component to be adsorbed flows, the gas adsorption unit 10 according to any one of (6) to (8), which is provided on the gas supply flow channel 2, and a temperature control unit 3 provided adjacent to the gas adsorption unit 10 to control a temperature of the gas adsorbent 42.

According to the above-described configuration, it is possible to provide a gas adsorption device 1 capable of stably performing gas adsorption and desorption for a longer period of time.

### Industrial Applicability

According to the present invention, it is possible to provide a flow channel forming plate, a gas adsorption unit, and a gas adsorption device, which can adsorb and desorb a target component with higher efficiency.

### Reference Signs List

1: gas adsorption device
2: gas supply flow channel
3: temperature control unit
10: gas adsorption unit
11: flow channel forming plate
12: curved plate
13: casing
41: porous plate
42: gas adsorbent
50: hole portion
D: flow direction of gas
F: flow channel

## Claims

1. A flow channel forming plate that is used to form a flow channel of a gas adsorption unit, the flow channel forming plate comprising:
a porous plate having a plurality of hole portions extending in a plate thickness direction; and
a gas adsorbent disposed to fill an inside of each of the hole portions,
wherein the porous plate is formed of a material having a thermal conductivity higher than a thermal conductivity of the gas adsorbent.

2. The flow channel forming plate according to Claim 1,
wherein the porous plate has greater rigidity than the gas adsorbent.

3. The flow channel forming plate according to Claim 1 or 2,
wherein the porous plate is a metal lath.

4. The flow channel forming plate according to Claim 1 or 2,
wherein the porous plate is exposed to an outside on both sides in the plate thickness direction.

5. The flow channel forming plate according to Claim 1 or 2,
wherein, in a cross-sectional view along the plate thickness direction, the gas adsorbent is further provided on both sides of the porous plate in the plate thickness direction.

6. A gas adsorption unit comprising:
a plurality of the flow channel forming plates according to Claim 1, which are disposed at intervals in the plate thickness direction to form the flow channel therebetween; and
a casing that holds the plurality of flow channel forming plates from an outer side.

7. The gas adsorption unit according to Claim 6, further comprising:
another flow channel forming plate provided between a pair of the flow channel forming plates adjacent to each other in the plate thickness direction, curved to be corrugated in the plate thickness direction, and having a top portion of a convex portion in contact with any one of the pair of flow channel forming plates.

8. The gas adsorption unit according to Claim 6 or 7,
wherein the flow channel is configured such that a gas flows in a direction along a surface of the porous plate.

9. A gas adsorption device comprising:
a gas supply flow channel through which a gas containing a component to be adsorbed flows;
the gas adsorption unit according to Claim 6 or 7, which is provided on the gas supply flow channel; and
a temperature control unit provided adjacent to the gas adsorption unit to control a temperature of the gas adsorbent.
